Europäisches Patentamt

European Patent Office

Office européen des brevets

(19)

(11) **EP 0 770 647 B1**

(12) **EUROPÄISCHE PATENTSCHRIFT**

(45) Veröffentlichungstag und Bekanntmachung des Hinweises auf die Patenterteilung:
**20.09.2000 Patentblatt 2000/38**

(51) Int Cl.$^7$: **C09C 1/24**, C04B 33/14, C09D 7/12, C08K 3/22, D21H 19/38, C09D 17/00

(21) Anmeldenummer: **96116405.0**

(22) Anmeldetag: **14.10.1996**

(54) **Farbreine, gelbstichige Eisenoxidrotpigmente, Verfahren zu ihrer Herstellung sowie deren Verwendung**

Yellowish red iron oxide pigments of pure colour, process for preparing them and their use

Pigments d'oxyde de fer rouge jaunâtres et de couleur pure, leur procédé de préparation et leur utilisation

(84) Benannte Vertragsstaaten:
**DE ES FR GB IT NL**

(30) Priorität: **26.10.1995 DE 19539900**
**24.06.1996 DE 19625092**

(43) Veröffentlichungstag der Anmeldung:
**02.05.1997 Patentblatt 1997/18**

(73) Patentinhaber: **BAYER AG**
**51368 Leverkusen (DE)**

(72) Erfinder:
• **Oehlert, Wolfgang, Dr.**
**47829 Krefeld (DE)**
• **Burow, Wilfried, Dr.**
**47809 Krefeld (DE)**
• **Brunn, Horst, Dr.**
**40668 Meerbusch (DE)**
• **Kunstmann, Herbert, Dr.**
**47802 Krefeld (DE)**

(56) Entgegenhaltungen:
EP-A- 0 187 331          DE-A- 4 135 742
GB-A- 2 271 769

• **DATABASE WPI Week 7533 Derwent Publications Ltd., London, GB; AN 75-54842w XP002063453 & JP 50 051 498 A (KANTO DENKA KOGYO K. K.) , 8.Mai 1975**
• **DATABASE WPI Week 7717 Derwent Publications Ltd., London, GB; AN 77-30053y XP002063454 & JP 52 035 199 A (TONE SANGYO) , 17.März 1977**

**Beschreibung**

Die Erfindung betrifft farbreine, gelbstichige Eisenoxidrotpigmente, ein Verfahren zu ihrer Herstellung sowie ihre Verwendung.

Eisenoxidfarbpigmente, die als ökologisch unbedenkliche Färbemittel zum Einsatz in Keramiken, Baustoffen, Kunststoffen und Lacken kommen, können grundsätzlich in gelben, braunen, schwarzen und roten Farbtönen erhalten werden. Anwendungsschwerpunkt der Eisenoxidfarbpigmente ist der Baustoffbereich, wo zur Einfärbung von Dachziegeln, Klinkersteinen etc. insbesondere rote Eisenoxidfarbpigmente eingesetzt werden.

Eisenoxidrotpigmente erhält man - wie in Pigment Handbook von T.C. Patton, New York, Londen 1973, S. 333 beschrieben - durch Rösten von Eisensulfat, durch Entwässerung von Eisenoxidgelb, durch direkte Fällung von Eisenoxidrot oder durch Oxidation von Eisenoxidschwarz. Farbreine, gelbstichige Rotpigmente sind durch Rösten von Eisensulfat, Entwässerung von Eisenoxidgelb oder direkte Fällung von Eisenoxidrot erhältlich. Durch Verglühen und Oxidation von Eisenoxidschwarz erhält man nur ungesättigte Eisenoxidrotpigmente mit unzureichendem Gelb stich.

Die vorgenannten Verfahren zur Erzeugung von farbreinen, gelbstichigen Rotpigmenten haben jedoch wirtschaftliche und ökologische Nachteile. Die Erzeugung von Rotpigmenten durch Entwässerung und Abrösten von Eisensulfat ist ein aufwendiger, kostenintensiver, mehrstufiger Prozeß, bei dem schwermetallhaltige Abwässer entstehen. Die Herstellung von Eisenoxidrot durch Entwässerung von Eisenoxidgelb ist ebenfalls kostenungünstig, da das Vorprodukt Eisenoxidgelb im wäßrigen Medium bei niedrigem pH zeitaufwendig erzeugt werden muß Das mechanisch schwer entwässerbare, nadelförmige Eisenoxidgelb muß mit hohen Trocknungskosten thermisch entwässert werden, und das entstehende Eisenoxidrot ist aufgrund seiner vom nadelförmigen Vorprodukt herrührenden anisotropen Teilchenform mahlempfindlich.

Kostenungünstig ist auch die Erzeugung von Eisenoxidrot durch Direktfällung, da die Pigmentsynthese, die im sauren bis neutralen Medium erfolgt, lediglich geringe Raumzeitausbeuten zuläßt. Auf diesem direkten Weg durch Fällung hergestellte Direktrotpigmente haben zudem hohe Gehalte an Arsen und Antimon, wie es in Industrial Minerals and Rocks, New York 1975, S.355, Tabelle 8, beschrieben ist. Durch Einbau von Wasser während des Pigmentbildungsprozesses bei der direkten Fällung von Eisenoxidrotpigmenten weisen diese Pigmente auch einen hohen Glühverlust (ca. 2 %) auf, wodurch sich eine Verwendung dieser Pigmente in bestimmten Anwendungen (Faserzement, Sandgranulat) verbietet. Der Verlust des eingebauten Wassers im Verlauf von thermisch anspruchsvollen Anwendungen (ca. 400-1000°C) ist mit einem Verlust der Farbreinheit und des Gelbstiches dieser direkt gefällten Eisenoxidrotpigmente verbunden. Darüber hinaus weisen direkt gefällte Eisenoxidrotpigmente eine hohe Mahlempfindlichkeit auf, die beispielsweise in der Baustoffanwendung zu unerwünschten Farbtonverschiebungen während des Dispergiervorgangs führen kann.

Es ist bekannt, daß durch Reaktion von Eisenrohstoffen - wie z.B. Eisenspänen - in saurem Medium mit Nitrobenzol Eisenoxidschwarz mit hohen Raumzeitausbeuten als günstiges Vorläuferprodukt für Eisenoxidrotpgimente erhalten werden kann. Die hohen Raumzeitausbeuten bei der Herstellung von Eisenoxidschwarz durch den Reduktionsprozeß sind bei den anderen Herstellverfahren für Eisenoxidschwarz nicht möglich. Für den exothermen Prozeß der Eisenoxidschwarzbildung muß keine weitere Energie zugeführt werden, und es entstehen darüber hinaus keine stöchiometrischen Mengen an Salzen - wie z.B. Natriumsulfat - bei der Pigmentbildung, was die ökonomischen und ökologischen Vorteile des Reduktionsprozesses verdeutlicht.

Es ist weiterhin bekannt, daß im Reaktionsprozeß zwischen Nitrobenzol und Eisenrohstoffen die Eigenschaften der gewünschten Pigmente nur durch einige Zusatzstoffe gesteuert werden können:
Zinkzusatz (DE 143 517)
NaCl-, CaCl$_2$-, MgCl$_2$-Zusatz (DE 463 773)
Aluminiumsalz-, Aluminiummetallzusatz (DE 515 758)
Zusatz von 3- oder 4-wertigen Metallen (DE 516 999)
Zusatz von wäßrigen Suspensionen 3- oder 4-wertiger Metalloxide bzw. -hydroxide (DE 518 929)
Zusatz von Pb-Verbindungen (DE 551 254)
H$_3$PO$_4$-Zusatz (DE 551 255)
Zusatz von Sn-Salzen (DE 1 191 063)
Zusatz von Na-, K-, NH$_4$-, Mg- und Ca-Salzen der schwefligen, thioschwefligen,
Thioschwefel-, dithionigen, Dithion- und Pyroschwefelsäure (DE 2 414 805)
Zusatz von Al-Salzen, Aluminat, NaOH zur Nachbehandlung (DE 2 826 941)
Zusatz von Borsäure und Borverbindungen (DE 4 135 742).

Bei Zusatz dieser sogenannten Steuerchemikalien im Reaktionsprozeß gelangt man jedoch nicht zu Eisenoxidschwarz, das sich als Vorläufer zur Erzeugung von farbreinen, gelbstichigen Eisenoxidrotpigmenten eignet. Der Einsatz von H$_2$SO$_4$ oder von Phosphorverbindungen - insbesondere von H$_3$PO$_4$ - in Mengen von 0 bis zu 900 ppm Phosphor, bezogen auf eingesetztes Eisen, führt zu einem Eisenoxidschwarz, das sich lediglich als Vorläufer für herkömmliche, ungesättigte Eisenoxidrotpigmente mit unzureichendem Gelbstich eignet. Zu hohe Mengen an H$_2$SO$_4$

zeigen keine Wirkung, und hohe Mengen an $H_3PO_4$ - mit Gehalten >10 000 ppm Phosphor, bezogen auf eingesetztes Eisen - führen nicht zu Eisenoxidschwarz, sondern zu unerwünschtem braunem Eisenoxid (Mischung aus $Fe_3O_4$, $\alpha$-FeOOH und $\alpha$-$Fe_2O_3$, DE 551 255). Durch Verglühen dieser braunen Eisenoxidpigmente erhält man unerwünschte, dunkle, ungesättigte, blaustichige Eisenoxidrotpigmente.

Durch Auffällen von Al-Verbindungen auf Eisenoxidschwarzpasten gelangt man zu Schwarzpigmenten, die nach Verglühen zu hellen und gesättigten Eisenoxidrotpigmenten führen (DE 2 826 941). Auf diesem Weg erschließen sich lediglich farbreine Rotpigmente für Purtonanwendungen im Lacksektor; gelbstichige Rotpigmente zur Einfärbung von Baustoffen (Ziegelrottöne) oder für Verschnittanwendungen mit Weißpigmenten werden nicht erhalten.

Aufgabe war es, verbesserte Eisenoxidrotpigmente zur Verfügung zu stellen, die sowohl in Baustoffanwendungen wie auch in Verschnittanwendungen mit Weißpigmenten zu farbreinen, gelbstichigen, ästhetischen Ziegelrottönen führen und die die Nachteile des Standes der Technik (Rösten von Eisensulfat, Entwässerung von Eisenoxidgelb oder direkte Fällung von Eisenoxidrot) nicht aufweisen, sowie ein ökonomisch und ökologisch günstiges Verfahren zu deren Herstellung zur Verfügung zu stellen.

Überraschenderweise wurde nun gefunden, daß die gewünschten Eisenoxidrotpigmente durch Kalzination einer Eisenoxidschwarzpaste aus einem modifizierten Nitrobenzolreduktionsprozeß hergestellt werden können. Die Eisenoxidrotpigmente weisen einen Glühverlust von kleiner 1 Gew.-% und einen Phosphorgehalt von 0,13 bis 0,50 Gew.-% auf und sind überraschend mahlstabil, farbrein und gelbstichig.

Gegenstand der vorliegenden Erfindung sind farbreine, gelbstichige Eisenoxidrotpigmente, die einen Glühverlust von kleiner 1 Gew.-% und einen Phosphorgehalt von 0,13 bis 0,50 Gew.-%, bevorzugt von 0,13 bis 0,30 Gew.-% aufweisen und in einem Schwerspatpreßling eine Helligkeit (L*) von 50 bis 60 CIELAB-Einheiten, bevorzugt von 52 bis 56 CIELAB-Einheiten, eine Buntheit (C*) von mehr als 43,5 CIELAB-Einheiten, bevorzugt von mehr als 44 CIELAB-Einheiten, und einen Rotanteil (a*) von mehr als 25 CIELAB-Einheiten, bevorzugt mehr als 28 CIELAB-Einheiten und einen Gelbanteil (b*) von mehr als 25 CIELAB-Einheiten, bevorzugt von mehr als 29 CIELAB-Einheiten, aufweisen.

Die erfindungsgemäßen Eisenoxidrotpigmente sind mahlstabil.

Ein weiterer Gegenstand der vorliegenden Erfindung ist ein Verfahren zur Herstellung der erfindungsgemäßen farbreinen, gelbstichigen Eisenoxidrotpigmente durch Kalzination von Magnetit, welches dadurch gekennzeichnet ist, daß der Magnetit durch Oxidation von Eisen mit Nitrobenzol in saurem Medium in Gegenwart von Phosphorverbindungen hergestellt wird, wobei die Menge an eingesetztem Phosphor, bezogen auf die Menge an eingesetztem metallischem Eisen, 1000 bis 5000 ppm, bevorzugt 1000 bis 3000 ppm, beträgt.

Überraschenderweise werden nach dem erfindungsgemäßen Verfahren farbreine, gelbstichige Eisenoxidrotpigmente erhalten, obwohl gemäß dem Stand der Technik die Verwendung von Phosphorsäure nur unzureichende Pigmente liefert.

Vorzugsweise werden Phosphate als Phosphorverbindungen, besonders bevorzugt Phosphorsäuren, wie z. B. $H_3PO_4$ eingesetzt.

Die erfindungsgemäßen Eisenoxidrotpigmente werden vorzugsweise zur Einfärbung im Baustoff-, Lack-, Kunststoff-, Papier- und Keramikbereich verwendet und zwar sowohl als pulverförmige Pigmente als auch in Form von staubarmen Granalien sowie in Form von Pasten und Slurries. Sie finden auch Verwendung als vorteilhafter Bestandteil von Eisenoxidbraunpigmenten

Eisenoxidbraunpigmente werden überwiegend durch Mischung von Eisenoxidschwarz, -rot und -gelb hergestellt. Helle, gelbstichige Eisenoxidbraunpigmente enthalten nadelförmiges Eisenoxidgelb, beispielsweise in Anteilen von 10-75 Gew.-%. Der Gehalt an Eisenoxidgelb trägt aufgrund seiner coloristischen Eigenschaften nur einen sehr geringen Teil zur Farbstärke der Eisenoxidbraunpigmente bei. Darüber hinaus führt der nadelförmige Eisenoxidgelbanteil zu Problemen während der Verflüssigung der Braunmischungen, so daß nur geringe Feststoffgehalte in Slurries eingestellt werden können. Durch Einsatz der erfindungsgemäßen farbreinen, gelbstichigen Eisenoxidrotpigmente in hellen, gelbstichigen Braunmischungen kann der notwendige Eisenoxidgelbanteil verringert oder ganz vermieden werden, so daß durch Verwendung der erfindungsgemäßen farbreinen, gelbstichigen Eisenoxidrotpigmente bei der Herstellung von Braunmischungen farbstarke, leicht verflüssigbare Eisenoxidbraunpigmente erhalten werden. Der Fachmann kann die Anteile der gelbstichigen Eisenoxidrotpigmente in Abhängigkeit des Eisenoxidgelbanteils zur Einstellung der gewünschten Farbwerte der Braunmischungen leicht ermitteln.

Die erfindungsgemäßen Eisenoxidrotpigmente können also vorzugsweise auch bei der Herstellung farbstarker, leicht verflüssigbarer Eisenoxidbraunpigmente verwendet werden.

Die Erfindung soll anhand der nachfolgenden Beispiele näher erläutert werden.

Die Bestimmung der CIELAB-Farbwerte (L*, a*, b* und C*) der erfindungsgemäß hergestellten Pigmente sowie der Pigmente aus den Vergleichsbeispielen erfolgt in Anlehnung an die DIN 53237, in der ein Prüfverfahren zur Festlegung der Eignung von Pigmenten zur Einfärbung von zement- und kalkgebundenen Baustoffen beschrieben wird. Die in der DIN 53237 beschriebene Meßmethode wurde zur Erlangung quantifizierbarer und reproduzierbarer Farbwerte modifiziert.

Es werden jeweils 0,500 g des zu untersuchenden Pigmentes mit 10,00 g Schwerspat in ein Schüttelglas mit

250 cm$^3$ Inhalt gegeben. Der als Bindemittel verwendete Schwerspat (BaSO$_4$) ist wie folgt charakterisiert:

Barytmehl F: Handelsprodukt der Fa. Sachtleben GmbH, Duisburg

Gesamtfeuchte:        < 0,5 %

| Teilchengrößenverteilung: | |
| --- | --- |
| Mittelwert der Volumenverteilung: | 9 μm |
| 10 %-Quantil der Volumenverteilung: | 1 μm |
| 90 %-Quantil der Volumenverteilung: | 21 μm |

Nach Zugabe von 200 neuwertigen Stahlkugeln (Kugellagerkugeln) von 5 mm Durchmesser in das mit dem Pigment-Schwerspat-Gemisch gefüllte Schüttelglas wird 300 Sekunden mit einem automatischen Tischrundschüttler mit einer Frequenz von 400 min$^{-1}$ und einem Schüttelkreisdurchmesser von 25 mm geschüttelt. Anschließend wird das Pigment-Schwerspat-Gemisch mit Hilfe eines Siebes von den Stahlkugeln getrennt und durch Aufstreichen auf einem rauhen Papier auf Homogenität geprüft. Das Schütteln wird bis zum Verschwinden kleinster Pigmentklumpen (Stippen) fortgesetzt.

Die gesamte Pigment-Schwerspat-Mischung wird anschließend auf einer handelsüblichen, hydraulischen Laborpresse nach Hinterfütterung der Pigment-Schwerspat-Mischung mit einem nicht färbenden Bindematerial (z.B. Zement) mit einem Preßdruck von 120 bar auf dem Preßling bei einer Druckhaltezeit von 5 Sekunden zu einem zylindrischen Körper mit einem Durchmesser von 40 mm und einer Höhe von ca. 4 mm verpreßt.

Die erhaltenen Schwerspatpreßlinge werden anschließend auf einem handelsüblichen Farbmeßgerät der Geometrie d/8° (Ulbrichtkugel) vermessen. Die erhaltenen Reflexionsfaktoren werden nach der Standardmethode entsprechend ASTM E 308-85 und DIN 6174 (ISO 7724/3, 1984; ASTM D 2244-85) unter Verwendung der Normlichtart C/2° unter Einschluß der Oberflächenreflexion in das CIELAB-Farbdatensystem umgerechnet, wobei C* als Quadratwurzel aus der Summe der Quadrate von a* und b* definiert ist

$$C^* = \sqrt{a^* + b^*}$$

.

Die Reproduzierbarkeit der Präparations- und Meßmethode wurde anhand von Proben des Eisenoxidrotpigmentes Bayferrox® 110 (Standard 1988, Handelsprodukt der Bayer AG) über einen Zeitraum von vier Jahren überprüft. Die nachfolgende Tabelle zeigt die einzelnen CIELAB-Farbwerte L*, a*, b* und C* sowie die entsprechenden Mittelwerte und Standardabweichungen:

Reproduzierbarkeit der Schwerspatpreßling-Farbbestimmungsmethode

| Probe | L* | a* | b* | C* |
| --- | --- | --- | --- | --- |
| 1 | 52,8 | 31,0 | 27,9 | 41,7 |
| 2 | 52,6 | 31,0 | 27,9 | 41,7 |
| 3 | 52,6 | 31,1 | 28,0 | 41,9 |
| 4 | 52,0 | 30,9 | 27,5 | 41,4 |
| Mittelwert | 52,5 | 31,0 | 27,8 | 41,7 |
| Standardabweichung | 0,3 | 0,1 | 0,2 | 0,2 |

Die Tabelle zeigt, daß man bei der Bestimmung der CIELAB-Farbwerte eines Pigment-Schwerspat-Preßlings mit einer Unsicherheit von 0,1 bis 0,3 Einheiten des entsprechenden Farbwertes L* (Helligkeit), a* (Rotanteil), b* (Gelbanteil) und C* (Buntheit) rechnen muß.

**Beispiele**

Anhand der nachfolgenden Beispiele wird das Herstellverfahren zur Erzeugung der erfindungsgemäßen, farbreinen, gelbstichigen Eisenoxidrotpigmente beispielhaft beschrieben, wobei der Fachmann das Verfahren in der Wahl der technischen Aggregate oder der eingesetzten Rohstoffe je nach Bedarf variieren kann. Eisenoxidpigmente, die durch Reaktion von Eisenrohstoffen mit Nitrobenzol erhalten werden, werden gemäß dem Laux-Verfahren hergestellt, das in den Patenten DE 463 773 und DE 464 561 beschrieben ist. Ausgehend von dem dort beschriebenen Verfahren, werden in druckfesten, mit Rührern ausgestatteten Kesseln folgende Stoffe umgesetzt:

| Vergleichsbeispiele: | | | | | | |
|---|---|---|---|---|---|---|
| Parameter | | Vergleichsbeispiel 1 | Vergleichsbeispiel 2 | Vergleichsbeispiel 3 | Vergleichsbeispiel 4 | Vergleichsbeispiel 5 (DRP 551255) |
| | | ($\Rightarrow$538 ppm P/Fe°) | ($\Rightarrow$772 ppm P/Fe°) | ($\Rightarrow$725 ppm P/Fe°) | ($\Rightarrow$888 ppm P/Fe°) | ($\Rightarrow$13510 ppm P/Fe°) |
| 1. Phase | $FeCl_2$-Lösung/(l) | 5,75 | 5,966 | 4500 | 5,75 | 0,3 |
| | $H_2O$(l) | 0,992 | 0,756 | 800 | 0.992 | 0,45 |
| | $H_2SO_4$ (96%)/(l) | 0,24 | 0,24 | 180 | 0,24 | 0 |
| | $H_3PO_4$ /(l) | 0,023 (85 %) | 0,033 (85 %) | 28 (75 %) | 0.038 (85 %) | 17,6 (85 %) |
| | Eisen/(kg) | 13,34 | 13,34 | 10000 | 13,34 | 0,6 |
| | Nitrobenzol/(l) | 0,67 | 0,67 | 500 | 0,67 | 0 |
| | | | | | | |
| 2. Phase | Eisen/(kg) | 8 | 8 | 6400 | 8 | |
| | Nitrobenzol/(l) | 12,67 | 12,67 | 10000 | 12,67 | 0,5 |
| | $H_2O$/(l) | 9,330 | 9,330 | 7000 | 9,330 | |

## Beispiele:

| Parameter | | Beispiel 1 | Beispiel 2 | Beispiel 3 |
|---|---|---|---|---|
| | | (⇒1005 ppm P/Fe°) | (⇒1573 ppm P/Fe°) | (⇒1763 ppm P/Fe°) |
| 1.Phase | FeCl$_2$-Lösung/(l) | 5,968 | 4800 | 4800 |
| | H$_2$O/(l) | 0,756 | 800 | 800 |
| | H$_2$SO$_4$ (96%)/(l) | 0,24 | 185 | 185 |
| | H$_3$PO$_4$ /(l) | 0,043 (85 %) | 60 (75 %) | 60 (75 %) |
| | Eisen/(kg) | 13,34 | 11000 | 11000 |
| | Nitrobenzol/(l) | 0,67 | 500 | 500 |
| | | | | |
| 2.Phase | Eisen/(kg) | 8 | 4800 | 3100 |
| | Nitrobenzol/(l) | 12,67 | 8250 | 7400 |
| | H$_2$O/(l) | 9,330 | 7000 | 6000 |

| Parameter | | Beispiel 4 | Beispiel 5 | Beispiel 6 |
|---|---|---|---|---|
| | | (⇒1768 ppm P/Fe°) | (⇒1835 ppm P/Fe°) | (⇒1946 ppm P/Fe°) |
| 1.Phase | FeCl$_2$-Lösung/(l) | 4800 | 4800 | 4800 |
| | H$_2$O/(l) | 800 | 800 | 800 |
| | H$_2$SO$_4$ (96%)/(l) | 185 | 185 | 185 |
| | H$_3$PO$_4$ /(l) | 70 (75 %) | 66 (75 %) | 70 (75 %) |
| | Eisen/(kg) | 11000 | 11000 | 11000 |
| | Nitrobenzol/(l) | 500 | 500 | 500 |
| | | | | |
| 2.Phase | Eisen/(kg) | 5400 | 3900 | 3900 |
| | Nitrobenzol/(l) | 8700 | 7900 | 7900 |
| | H$_2$O/(l) | 7000 | 7000 | 7000 |

Die Aufarbeitung der erhaltenen Schwarzpasten erfolgt in allen Fällen gleichartig durch die nachfolgend beschriebenen Schritte (Waschung, Glühung und Mahlung):

**Waschung:**

- In einem 2 l-Kolben werden 200-250 g Paste (mit möglichst wenig flüssiger Phase) mit Trinkwasser aufgeschlämmt (kräftig schütteln).
- Zur Abtrennung des Resteisens/Grobanteils wird die Suspension über ein 40 μ-Sieb in einen 10 l-Filterstutzen gegeben. Mit Hilfe eines Rundpinsels kann die Suspension gegebenenfalls durch das Sieb gestrichen werden.
- Die Suspension wird im Stutzen mit Trinkwasser aufgeschlämmt.
- Man läßt sedimentieren; zur Unterstützung wird der Stutzen auf einen Dauermagneten gestellt (Ausnutzung der magnetischen Eigenschaften von Eisenoxidschwarz).
- Das Waschwasser wird abdekantiert und die Paste wieder mit Trinkwasser aufgeschlämmt.
- Es wird solange dekantiert gewaschen bis die Leitfähigkeit des Waschwassers der des Trinkwassers entspricht (= salzfrei).

**Filtration:**

- Der mit Filterpapier ausgelegte Büchnertrichter wird auf eine Saugflasche gesetzt. Das Filterpapier wird sorgfältig mit Trinkwasser befeuchtet und auf dem Büchnertrichter glattgestrichen.
- Die Saugflasche wird an eine Vakuumpumpe angeschlossen, und es wird ein Vakuum hergestellt.
- Die Pigmentsuspension wird auf den Büchnertrichter gegossen.
- Nach dem Absaugen wird der Filterkuchen in eine Aluminiumschale gestülpt und der Filter entfernt.

**Glühung:**

- Die Pigmentpaste wird in einer Aluminiumschale ca. 20 Minuten bei 240°C im Trockenschrank getempert.
- Das getemperte Material wird mit Hilfe eines Pistills durch ein 2 mm-Sieb gestrichen.
- In einem Schälchen werden 10 g des getemperten Materials eingewogen und mit Hilfe einer Tiegelzange in den auf 800°C vorgeheizten Laborkammerofen gestellt.
- Nach 15 Minuten Glühzeit wird mit Hilfe eines Rührhakens ca. 30 Sekunden kräftig gerührt.
- Anschließend wird das Pigment für weitere 15 Minuten verglüht.
- Unter Zuhilfenahme der Tiegelzange wird das Schälchen aus dem Ofen genommen und zum Auskühlen auf eine hitzebeständige Ceranplatte gestellt.
- Im Einzelfall kann auch das fertige, bei 105°C getrocknete Schwarzpigment nachträglich 20 Minuten bei 240°C getempert und im Laborkammerofen wie oben angegeben verglüht werden.

**Mahlung:**

Jeweils 3,2 g der erfindungsgemäß hergestellten Pigmente und der Pigmente aus den Vergleichsbeispielen werden 60 Sekunden in einer Kugelschwingmühle, Typ Mikrodismembrator II der Fa. B. Braun, mit einer 10 mm Stahlkugel (Kugellagerkugel) aufgemahlen. Als Mahlraum wird ein ovaler Rotationskörper ($r_1$ = 1,48 cm, $r_2$ = 2,03 cm) aus Polyamid mit einem Volumen von 18,5 cm$^3$ verwendet.

Die Schwingungsamplitude der annähernden Linearschwingung in Richtung der Längsachse des Mahlraumes beträgt 13 mm bei einer gleichseitigen Auslenkung von 6,5 mm. Die Schwingungsfrequenz liegt bei 50 Hz.

Tabelle 1

| Phosphorgehalte und Farbdaten der erfindungsgemäßen Eisenoxidrotpigmente sowie der Vergleichspigmente | | | | | | | |
|---|---|---|---|---|---|---|---|
| **CIELAB-Farbwerte im Schwerspat kalzinierter Eisenoxidrotpigmente** | | | | | | | |
| Beispiel | ppm P/Fe° | L* | a* | b* | C* | %P im Pigment | Glühverlust |
| Vergleichsbeispiel 1 | 538 | 51,8 | 30,6 | 27.9 | 41.4 | 0,07 | < 1 % |

Tabelle 1   (fortgesetzt)

| CIELAB-Farbwerte im Schwerspat kalzinierter Eisenoxidrotpigmente | | | | | | | |
|---|---|---|---|---|---|---|---|
| Beispiel | ppm P/Fe° | L* | a* | b* | C* | %P im Pigment | Glühverlust |
| Vergleichsbeispiel 2 | 772 | 52,2 | 30,2 | 27,6 | 40,9 | 0,10 | < 1 % |
| Vergleichsbeispiel 3 | 725 | 52,0 | 30,2 | 27,2 | 40.6 | 0,08 | < 1 % |
| Vergleichsbeispiel 4 | 888 | 51,8 | 30,2 | 28,6 | 41,6 | 0,10 | < 1 % |
| Vergleichsbeispiel 5 | 13510 | 63,1 | 9,8 | 6,7 | 11,9 | 0,09 | < 1 % |
| | | | | | | | |
| Beispiel 1 | 1005 | 52,9 | 30,4 | 31,8 | 44,0 | 0,13 | < 1 % |
| Beispiel 2 | 1573 | 57,5 | 28,5 | 34,7 | 44,9 | 0,15 | < 1 % |
| Beispiel 3 | 1763 | 54,6 | 29,7 | 34,0 | 45,1 | 0,18 | < 1 % |
| Beispiel 4 | 1768 | 55,2 | 29,8 | 34,9 | 45,9 | 0,14 | < 1 % |
| Beispiel 5 | 1835 | 54,4 | 30,5 | 35,1 | 46,5 | 0,16 | < 1 % |
| Beispiel 6 | 1946 | 54,9 | 30,2 | 36,1 | 47,1 | 0,20 | < 1 % |
| | | | | | | | |
| Röstrot | | 52,2 | 31,4 | 28,7 | 42,5 | 0,05 | < 1 % |
| direkt gefälltes Rot | | 52-54 | 29 - 31 | 23 - 35 | 37 - 47 | 0,003 | > 2 % |
| | | | | | | | |

Tabelle 1 enthält die farbmetrischen Daten einiger erfindungsgmäßer Pigmente sowie die Farbwerte einiger Vergleichspigmente. Als Maß für die Farbreinheit der Pigmente gilt die Buntheit (C*), als Maß für den Gelbstich gilt der Gelbanteil (b*).

**Patentansprüche**

1.   Farbreine, gelbstichige Eisenoxidrotpigmente mit einem Glühverlust von kleiner 1 Gew.-%, einem P-Gehalt von 0,13 bis 0,50 Gew.-%, einer Helligkeit (L*) von 50 bis 60 CIELAB-Einheiten, einer Buntheit (C*) von mehr als 43,5 CIELAB-Einheiten und einem Rotanteil (a*) von mehr als 25 CIELAB-Einheiten und einem Gelbanteil (b*) von mehr als 25 CIELAB-Einheiten in einem Schwerspatpreßling.

2.   Eisenoxidrotpigmente gemäß Anspruch 1 mit einem P-Gehalt von 0,13 bis 0,30 Gew.-%.

3.   Eisenoxidrotpigmente gemäß einem der Ansprüche 1 oder 2 mit einer Buntheit in einem Schwerspatpreßling von mehr als 44 CIELAB-Einheiten.

4.   Eisenoxidrotpigmente gemäß einem oder mehreren der Ansprüche 1 bis 3, dadurch gekennzeichnet, daß in einem Schwerspatpreßling der Rotanteil (a*) größer als 28 CIELAB-Einheiten und der Gelbanteil (b*) größer als 29 CIELAB-Einheiten ist.

5.   Verfahren zur Herstellung farbreiner, gelbstichiger Eisenoxidrotpigmente gemäß der Ansprüche 1 bis 4 durch Kalzination von Magnetit, dadurch gekennzeichnet, daß der Magnetit durch Oxidation von Eisen mit Nitrobenzol im sauren Medium in Gegenwart von Phosphorverbindungen hergestellt wird, wobei die Menge an eingesetztem Phosphor, bezogen auf die eingesetzte metallische Eisenmenge, 1000 bis 5000 ppm beträgt.

6.   Verfahren gemäß Anspruch 5, dadurch gekennzeichnet, daß die Menge an eingesetztem Phosphor, bezogen auf die eingesetzte metallische Eisenmenge 1000 bis 3000 ppm beträgt.

7.   Verfahren gemäß einem der Ansprüche 5 oder 6, dadurch gekennzeichnet, daß als Phosphorverbindungen Phosphate eingesetzt werden.

8. Verfahren gemäß einem der Ansprüche 5 oder 6, dadurch gekennzeichnet, daß als Phosphorverbindungen Phosphorsäuren eingesetzt werden.

9. Verfahren gemäß Anspruch 8, dadurch gekennzeichnet, daß als Phosphorverbindung $H_3PO_4$ eingesetzt wird.

10. Verwendung der farbreinen, gelbstichigen Eisenoxidrotpigmente gemäß einem oder mehreren der Ansprüche 1 bis 4 zur Einfärbung im Baustoff-, Keramik-, Lack-, Kunststoff- oder Papierbereich.

11. Verwendung der farbreinen, gelbstichigen Eisenoxidrotpigmente gemäß Anspruch 10 in Form von Pasten, Slurries oder Granulaten.

12. Verwendung der farbreinen, gelbstichigen Eisenoxidrotpigmente gemäß einem oder mehreren der Ansprüche 1 bis 4 zur Herstellung farbstarker, leicht verflüssigbarer Eisenoxidbraunmischungen.

**Claims**

1. Colour-pure, yellow-tinged red iron oxide pigments with a loss on ignition of less than 1 wt.%, a P content of 0.13 to 0.50 wt.%, a luminosity (L*) of 50 to 60 CIELAB units, a chroma (C*) of more than 43.5 CIELAB units and a red content (a*) of more than 25 CIELAB units and a yellow content (b*) of more than 25 CIELAB units in a barite moulding.

2. Red iron oxide pigments according to Claim 1 with a P content of 0.13 to 0.30 wt.%.

3. Red iron oxide pigments according to one of Claims 1 or 2 with a chroma in a barite moulding of more than 44 CIELAB units.

4. Red iron oxide pigments according to one or more of Claims 1 to 3, characterized in that in a barite moulding the red content (a*) is greater than 28 CIELAB units and the yellow content (b*) is greater than 29 CIELAB units.

5. Process for producing colour-pure, yellow-tinged red iron oxide pigments according to Claims 1 to 4 by calcination of magnetite, characterized in that the magnetite is produced by oxidation of iron with nitrobenzene in acid medium in the presence of phosphorus compounds, wherein the quantity of phosphorus used, related to the quantity of metallic iron used, is 1000 to 5000 ppm.

6. Process according to Claim 5, characterized in that the quantity of phosphorus used, related to the quantity of metallic iron used, is 1000 to 3000 ppm.

7. Process according to one of Claims 5 or 6, characterized in that phosphates are used as phosphorus compounds.

8. Process according to one of Claims 5 or 6, characterized in that phosphoric acids are used as phosphorus compounds.

9. Process according to Claim 8, characterized in that $H_3PO_4$ is used as phosphorus compound.

10. Use of the colour-pure, yellow-tinged red iron oxide pigments according to one or more of Claims 1 to 4 for dyeing in the building materials, ceramics, lacquer, plastics or paper fields.

11. Use of the colour-pure, yellow-tinged red iron oxide pigments according to Claim 10 in the form of pastes, slurries or granules.

12. Use of the colour-pure, yellow-tinged red iron oxide pigments according to one or more of Claims 1 to 4 for producing intensely coloured, easily liquefiable brown iron oxide mixtures.

**Revendications**

1. Pigments d'oxyde de fer rouge jaunâtres, de couleur pure, avec une perte par calcination inférieure à 1% en poids, une teneur en P de 0,13 à 0,50% en poids, une luminosité (L*) de 50 à 60 unités CIELAB, une saturation (C*) de plus de 43,5 unités CIELAB, et une contribution relative rouge (a*) de plus de 25 unités CIELAB et une contribution relative jaune (b*) de plus de 25 unités CIELAB dans une pièce moulée de barytine.

2. Pigments d'oxyde de fer rouge selon la revendication 1 avec une teneur en P de 0,13 à 0,30% en poids.

3. Pigments d'oxyde de fer rouge selon la revendication 1 ou 2 avec une saturation dans une pièce moulée de barytine de plus de 44 unités CIELAB.

4. Pigments d'oxyde de fer rouge selon une ou plusieurs des revendications 1 à 3, caractérisés en ce que dans une pièce moulée de barytine la contribution relative rouge (a*) est supérieure à 28 CIELAB et la contribution relative jaune (b*) est supérieure à 29 unités CIELAB.

5. Procédé de préparation de pigments d'oxyde de fer rouge jaunâtres, de couleur pure selon les revendications 1 à 4, par calcination de magnétite, caractérisé en ce que la magnétite est obtenue par oxydation du fer avec le nitrobenzène dans un milieu acide en présence de composés de phosphore, la quantité de phosphore utilisée, rapportée à la quantité de fer métallique utilisée, étant 1000 à 5000 ppm.

6. Procédé selon la revendication 5, caractérisé en ce que la quantité de phosphore utilisée, rapportée à la quantité de fer métallique utilisée, est 1000 à 3000 ppm.

7. Procédé selon l'une des revendications 5 ou 6, caractérisé en ce qu'on utilise comme composés de phosphore du phosphate.

8. Procédé selon l'une des revendications 5 ou 6, caractérisé en ce qu'on utilise comme composés de phosphore des acides phosphoriques.

9. Procédé selon la revendication 8, caractérisé en ce qu'on utilise comme composé de phosphore $H_3PO_4$.

10. Utilisation de pigments d'oxyde de fer rouge jaunâtres, de couleur pure, selon l'une ou plusieurs des revendications 1 à 4, pour la coloration dans le domaine des matériaux de construction, des céramiques, des laques, des matières plastiques, ou du papier.

11. Utilisation de pigments d'oxyde de fer rouge jaunâtres, de couleur pure, selon la revendication 10, sous forme de pâtes, de dispersions ou de granulés.

12. Utilisation de pigments d'oxyde de fer rouge jaunâtres, de couleur pure, selon l'une ou plusieurs des revendications 1 à 4, pour la fabrication de mélanges bruns d'oxyde de fer facilement liquéfiables, de coloration intense.